# EUROPEAN PATENT APPLICATION

(11) **EP 1 739 988 A1**
(43) Date of publication of application: **03.01.2007**
(21) Application number: 04724243.3
(22) Date of filing: 30.03.2004
(51) Int. Cl.: H04Q 7/30

(54) **METHOD OF MICROCELL MANAGEMENT IN MOBILE COMMUNICATION SYSTEM USING CENTRALIZED BASESTATION**

(71) Applicant: Utstarcom Telecom Co., Ltd, Hangzhou, Zhenjiang 310012 (CN)
(72) Inventor: LIU, Sheng, Shenzhen, Guangdong 518057 (CN); ZHAO, Baijun, Shenzhen, Guangdong 518057 (CN)
(74) Representative: Bernhardt, Reinold
(86) International application number: PCT/CN2004/000283
(87) International publication number: WO 2005/096648

(57) **Abstract**

The application discloses a micro-cell management method in a mobile communication system with a centralized base station, comprising: measuring parameters of each of the micro-cells; merging those of the micro-cells that have similar parameters and are geographically adjacent to each other, as a larger merged cell, wherein the remote radio units corresponding to the micro-cells that were merged are used as a distributed RF transceiver system of the merged cell, and wherein the merging satisfies the following conditions: the radio interface capacity that are supported by the merged cell is not lower than the total capacity requirement of the micro-cells that were merged, if it is not limited by the available processing resources of the centralized base station.

## Description

### TECHNICAL FIELD

The present invention relates to the field of distributed base stations in a mobile communication system, in particular to a micro-cell management method in a mobile communication system with a centralized base station.

### BACKGROUND ART

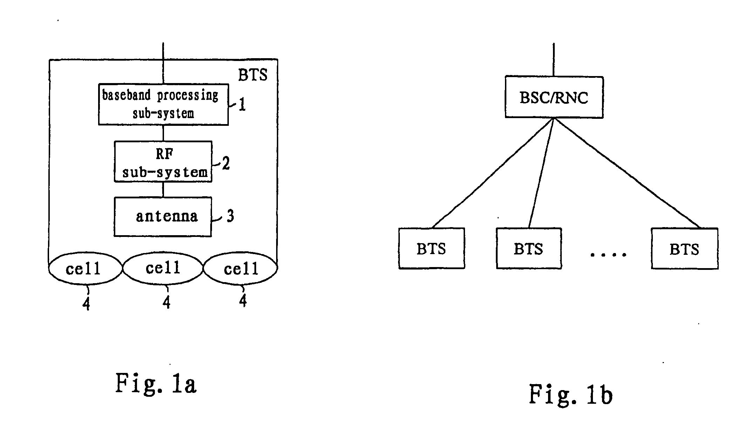

In a mobile communication system, a base station BTS transmits, receives and processes wireless signals, as shown in Fig. 1(a). A conventional base station comprises a baseband processing sub-system 1, a radio frequency (RF) sub-system 2 and an antenna 3. A BTS may cover a plurality of cells 4 with a plurality of antennae. Each of the base stations (BTSs) is connected to a base station controller (BSC) or a radio network controller (RNC) via respective interfaces. Thus, a radio access network (RAN) is formed, as shown in Fig. 1(b).

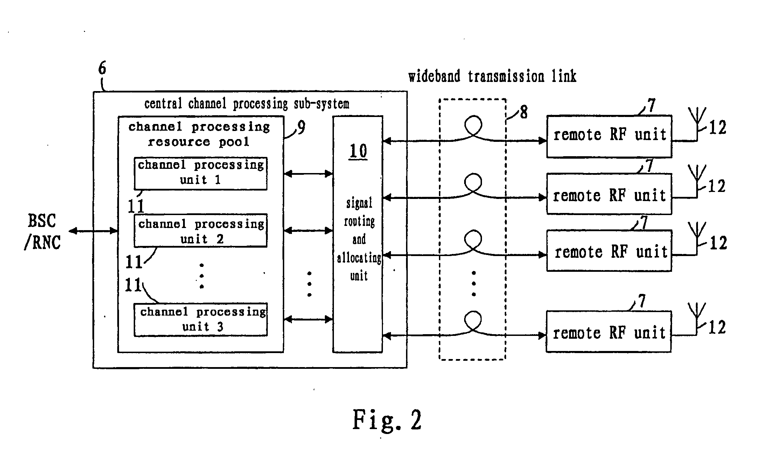

Fig. 2 illustrates the architecture of another distributed base station, that is, a centralized base station with remote radio units. As compared with a conventional base station, such a centralized base station with remote radio units has multiple advantages: it is possible to replace a macro-cell based on a conventional base station with a plurality of micro-cells, so that the station would be more adaptable to various radio environments and the wireless performances such as the capacity and coverage of the system could be improved; the centralized architecture makes it possible to perform softer handover than the soft handover in a conventional base station, thereby obtaining additional processing gain; the centralized architecture also makes expensive processing resources for the baseband signals to be a common resource pool shared by a plurality of cells, thereby benefiting from statistically multiplexing and reduces the cost of the system. Details of such a technology are disclosed by PCT Patent Application WO9005432, entitled "Communication System"; U.S. Patents US5657374, entitled "Cellular System with Centralized Base Station and Distributed Antenna Units" and US6324391, entitled "Cellular Communication with Centralized Control and Signal Processing"; Chinese Patent Applications CN1464666, entitled "Software Defined Radio Base Station System with Optical Fiber Linked Remote Radio Units and Synchronous Method Thereof" and CN1471331, entitled "Base Station System for Mobile Communication"; and U.S. Patent Application US 20030171118, entitled "Cellular Radio Transmission Apparatus and Cellular Radio Transmission Method".

As shown in Fig. 2, a centralized base station with remote radio units comprises a central channel processing sub-system 6 that is centrally arranged and remote radio units 7 connected to the sub-system 6 through wideband transmission links 8 or networks. The central channel processing sub-system comprises a channel processing resource pool 9, a signal routing and allocating unit 10 and the like. Here, the channel processing resource pool 9 comprises multiple stacked channel processing units 11, carries out baseband signals processing and the like. The signal routing and allocating unit 10 dynamically allocates the channel processing resources based on the different traffics of the cells to realize effective share of the processing resources among the cells. The signal routing and allocating unit 10 may be either implemented as a separate device outside the central channel processing sub-system 6, or implemented inside the central channel processing sub-system 6, as shown in Fig. 2. A remote radio unit 7 comprises a RF power amplifier for transmission channel (not shown), a low-noise amplifier for receiving channel (not shown), an antenna 12 and other functional units. The links 8 between the central channel processing sub-system 6 and the remote radio units 7 are typically implmented with a transmission medium such as optical fiber, copper cable and microwave, where the signal transmission mode may be sampled digital signal or modulated analog signal, and the signal may be baseband signal, intermediate-frequency signal or radio frequency signal.

As stated above, a centralized base station system with remote radio units is beneficial to the improvement of the capacity of the system because it allows a plurality of micro-cells to replace a macro-cell based on a conventional base station. For example, in a WCDMA (wideband code division multiple access) system, the capacity of the system, in the uplink, depends on interferences in the uplink. Due to power control for the uplink, each user equipment in each micro-cell controlled by the centralized base station transmits a low power interfering less with the other micro-cells, resulting in increased uplink capacity as compared with that of the macro-cell. In the downlink, the capacity of the system depends on the maximum total transmission power in the downlink and the number of the OVSF (orthogonal vector spread factor) codes. Because each micro-cell under control of the centralized base station has a significantly smaller coverage scope than the macro-cell, the limitation of the power to the downlink capacity decreases significantly. At the same time, the limitation of the number of the OVSF codes to the downlink capacity is also solved because each micro-cell has different downlink scramble code and is able to independently allocate its OVSF code resource.

However, since a micro-cell has a small radius, it inevitably results in a higher handover frequency of user equipments than a macro-cell does, especially in the situation where the user equipment moves in a high speed. Higher handover frequency of user equipments will cause many potential problems: the drop-line rate of user equipments increases; the power consumption of user equipments increases due to frequent radio measurements caused by handover, thereby decreasing the standby time of user equipments; excessive handover consumes extra radio resources and thus counteracts some system capacity increased due to adoption of micro-cells. On the other hand, in the case of the centralized base station with remote radio units, the system covers a wider area, that is, controls a greater number of micro-cells, resulting in a significantly decreased probability that the entire area reaches the peak capacity at the same time. Therefore, there are many cells with low utilization rate of the capacity, thereby failing to actually benefit from the system capacity potentially increased due to adoption of micro-cells.

### SUMMARY OF THE INVENTION

For the above reasons, there needs a solution that can take full above-described advantages of the micro-cells and suppress the above-described drawbacks.

For this end, the present invention presents a micro-cell management method used in a mobile communication system with a centralized base station with remote radio units, comprising: measuring the relevant parameters of each of the micro-cells, such as the moving speeds of user equipments, and/or the loads of respective micro-cells, and/or the occupancy of the processing resources of the centralized base station, and the like; merging the micro-cells that have similar parameters and are geographically adjacent to each other as a larger cell, respectively, wherein the remote radio units corresponding to the micro-cells that were merged serve as the distributed RF transceiver system of the resultant merged cell, and the merging satisfies the condition that the radio interface capacity that are supported by the merged cell is not lower than the total capacity requirement of the micro-cells that were merged, if the radio interface capacity is not limited by the available processing resources of the centralized base station.

### BRIEF DESCRIPTION OF THE DRAWINGS

The preferred embodiments of the invention are illustrated in connection with the exemplary accompanying drawing, in which:
Figure 1(a) is a schematic diagram showing a conventional base station;
Figure 1(b) is a schematic diagram showing a conventional radio access network;
Figure 2 is a structural diagram showing a centralized base station with remote radio units; and
Figure 3 is a schematic diagram showing the micro-cell management method of the invention.

### DETAILED DESCRIPTION OF THE EMBODIMENTS

For convenience, the invention will be discussed in details below by taking the WCDMA system as an example. However, it can be appreciated that the basic spirit and method of the invention is applicable to the other mobile communication system, such as CDMA2000, TD-SCDMA, UTRA TDD, GSM/GPRS, PHS and the like.

According to the invention, when the technology of a centralized base station with remote radio units is adopted, the micro-cells it covers are controlled based on the relevant parameters of the micro-cells, such as the moving speeds of user equipments, the loads of the micro-cells, and the occupancy of the processing resources of the centralized base station. That is, the micro-cells that have similar parameters and are geographically adjacent to each other are merged as one larger cell. The resultant merged cell has the same downlink scramble codes, while the remote radio units corresponding to the micro-cells that constitute the merged cell are used as the distributed RF transceiver system of the merged cell. The merging of the micro-cells satisfies the condition that the radio interface capacity that the merged cell can support is not lower than the total capacity requirement of the micro-cells that were merged, if it is not limited by the available processing resources of the centralized base station.

Whether the micro-cells are geographically adjacent to each other or not is actually constant and can be preset in the system as parameters when establishing the networks. Alternatively, if the above information is not preset in the system, it is easy for those skilled in the art to obtain the information from the configuration of the system.

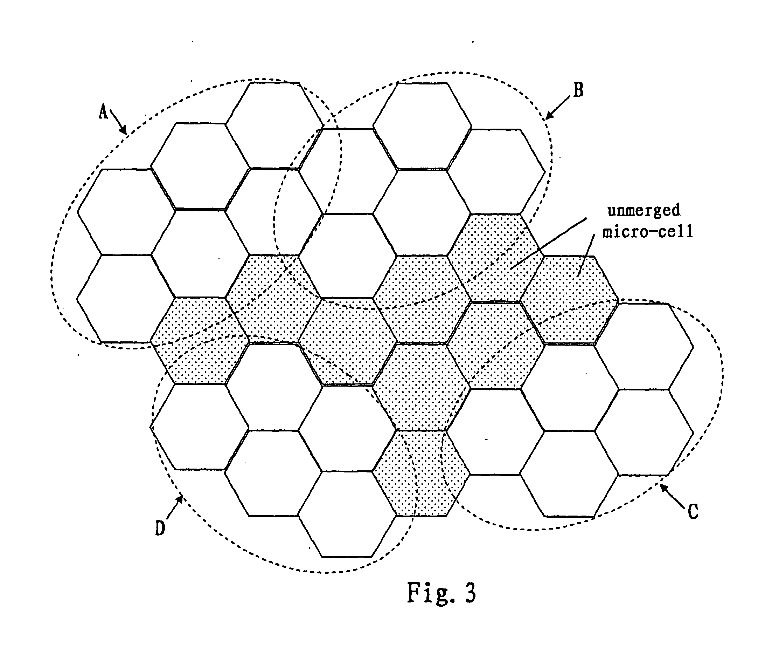

As shown in Fig. 3, a hexagon represents a micro-cell and all the micro-cells are controlled by a centralized base station with remote radio units. Fig. 3 schematically shows four resultant larger merged cells A, B, C and D, each of which is formed by merging multiple elementary micro-cells (hexagons enclosed by dash lines) based on said parameters (such as the mobility of user equipments, the loads of the micro-cells, and the occupancy of the processing resources of the centralized base station). The remaining micro-cells keep their sizes as they were according to the values of the corresponding parameters, that is, they are still independent micro-cells. If the requirement for the capacity in an area decreases, the processing resources of the centralized base station are saved by adopting the invention, and at the same time, the problems caused by frequent handovers can be effectively overcome by merging a plurality of micro-cells.

According to the invention, adjacent micro-cells can be dynamically merged as a larger cell. In other words, the size of the merged cell (the number of the micro-cells contained in the merged cell), the area for merging, the life period of the merged cell and the like can be adaptively adjusted based on said parameters such as the moving speeds of user equipments, the loads of the micro-cells, and the occupancy of the processing resources of the centralized base station. For instance, the life period of the merged cell may be determined from the parameters. When the life period expires, the measurement of the parameters and the merging of the micro-cells are repeated. The process is thus repeatedly performed. Obviously, each time the resultant merged cells and the life period thereof may change as the parameters of the micro-cells change.

For another instance, even before the life period expires, if there appear suitable conditions, for example, if some parameters of the micro-cells in or adjacent to the merged cell change dramatically, then a new merging process may be conducted, or some new micro-cells may be added into the merged cell, or some micro-cells may exit from the merged cell to become independent micro-cells, join the other merged cells or merge with the other independent micro-cells. The incorporation of the new micro-cells into a merged cell and the merging of the dropped-out micro-cells with another merged cell are similar to the simple merging of micro-cells, and thus the explanation thereof is omitted.

To detect the dramatic changes of the parameters, generally a threshold may be set for each parameter. If the parameter gets higher than the threshold for a predetermined time period (which may also be zero), it means that a dramatic change happens. The threshold may be the change rate of the parameter, the change amplitude of the parameter, the allowed absolute range of the change in the parameter, or the like. It is to be noted that "the threshold" in the specification does not necessarily mean a single value, but it may also mean a set of values.

In the above explained dynamic adjustment, there are two inverse processes: the micro-cells joining the merged cell or the merging of the micro-cells, and the micro-cells exiting from the merged cell or the disassembly of the merged cell. A specific threshold of a specific parameter may have different values in the two inverse processes. For instance, assuming the average moving speed of user equipments in a micro-cell to be the criteria for merging, the above dynamic process may be performed in a manner as follows: when the average moving speed becomes lower than a first threshold for a predetermined time period, the corresponding micro-cell will join the merged cell; when the average moving speed becomes higher than a second threshold for a predetermined time period, the corresponding micro-cell will exit from the merged cell, where the first threshold is lower than the second threshold.

According to the invention, non-dynamic configuration method can be adopted to merge adjacent micro-cells as one cell. In particular, according to the system configuration, some micro-cells geographically adjacent to each other in some areas are fixedly configured as one cell. An unlimiting exemplary application of the method happens in the early stage of establishing the radio network. The designed early stage capacity of the system is not large due to the limitation of the investment scale and the commercial operation strategy. If the remote radio units of a large amount of micro-cells and the corresponding wideband transmission links have been set up using the technology of centralized base station with remote radio units, it is un-necessary in terms of capacity to configure the system on micro-cell-basis, because the capacity of the system at that time is mainly limited by the designed capacities of the network equipments themselves. Therefore, the technology according to the invention can advantageously overcome the potential problems caused by frequent handovers, improving the quality of service of the system.

Obviously, the dynamic and static methods can be combined according to the area conditions of the mobile communication networks and the operation policy of the operator. In other words, in some geographical areas, the micro-cells will be merged dynamically, while in some other geographical areas, the micro-cells will be merged statically.

As described above, the parameters may be the moving speeds of user equipments in the micro-cell, the load of the micro-cell, the occupancy of the processing resources of the centralized base station, and the like. According to the invention, merging of micro-cells can rely on one or more of the parameters or some other parameters. Obviously, it is necessary to obtain such parameters before the merging. It is widely known to those skilled in the art to obtain the load of the micro-cell and the occupancy of the processing resources of the centralized base station from the system. As for the moving speed, there exist many methods for measuring the moving speeds of user equipments in the prior art, such as the U.S. Patent Application US2002-0052210, entitled "Mobile Radio Terminal and Its Moving Speed Detection Method" and the U.S. Patent US6249682, entitled "Apparatus and Method for Estimating Speed in Mobile Communication". In addition, a method of detecting and making statistics for the handover frequencies of user equipments can be taken to determine the mobility of the user equipments in a micro-cell, as disclosed by the Chinese patent application CN 1464644, entitled "A Method for Detecting the Moving Speed of a Mobile Terminal in Mobile Communication System".

As an example, description will be given for determining the merging of micro-cells from said parameters.

According to the invention, an unlimiting rule for determining whether to merge adjacent micro-cells as one cell is that the user equipments in the micro-cells are similar in terms of mobility within a predetermined period, such as a predetermined period of time before the merging. Here, "similar mobility" means that the distribution of the moving speeds of the user equipments in the micro-cell are substantially within a certain range. As an preferred example, the range of the moving speeds of user equipments may be divided into three intervals: low speed, middle speed and high speed (of course, more or less intervals are envisable). Then, if we say the mobility of the user equipments in a micro-cell is similar, it means that the moving speeds of the user equipments in the micro-cell are mainly distributed within a certain one of the three intervals. In other words, if the user equipments in two micro-cells have their moving speeds falling within the same interval, the two micro-cells are similar in terms of moving speed.

Considering that in practice it is impossible that the conditions of all the user equipments are the same, the above rule may be modified accordingly. For example, if a predetermined percentage, such as 90%, of the user equipments in some micro-cells have moving speeds within the same interval, these micro-cells would be deemed similar in terms of moving speed.

According to the invention, another unlimiting rule for determining merging micro-cells as one cell is that the micro-cells have similar loads (i.e., similar average number of active users and/or similar occupancy of traffic channel) within a predetermined period, such as a predetermined period of time before the merging. If a plurality of geographically adjacent micro-cells have similar loads, it shows that the areas they serve have similar distribution of traffic and thus can be merged.

In addition, the areas with different requirements for capacity within a predetermined period can be identified according to the loads of cells. Such property of the respective area generally has continuity to some extent in the future. For the hot spot, an area with high requirement for capacity, adjacent micro-cells are not apt to be merged. For a non-hot spot with relatively low requirement for capacity, adjacent micro-cells are apt to be merged as one cell.

According to the conditions of the system and the operation policy of the operator, a first and second thresholds may be set for the average number of active users and the occupancy of traffic channel, respectively. When the thresholds are reached for a predetermined time period (which may be zero), the corresponding micro-cells keep independent and are not merged. On the other hand, a third and fourth thresholds may also be set for the average number of active users and the occupancy of traffic channel. When the thresholds are not reached for a predetermined time period (which may be zero), the corresponding micro-cells may be merged. The first and second thresholds, and the third and fourth thresholds, respectively, may be identical or different to each other. Obviously, according to the conditions of the system and the operation policy of the operator, what are considered may be only the first and third thresholds, or may be only the second and the fourth thresholds; alternatively, both the first, third thresholds and the second, fourth thresholds may be adopted.

According to the invention, another unlimiting rule for determining whether to merge adjacent micro-cells as one cell is that the occupancy of the processing resources of the centralized base station is evaluated when merging the micro-cells. In particular, if, according to the allocation policy for the processing resources of the centralized base station, the amount of the processing resources of the centralized base station that are allocated to the adjacent micro-cells in a certain area decreases, then the redundant radio interface capacity in the area will not be actually utilized due to the limitation of the processing resources of the base station themselves. In such a situation, the adjacent micro-cells in the area can be merged as one larger cell to improve the handover performance.

It is well known to those skilled in the art that the processing resources of the centralized base station are made up of various aspects, or may be represented by multiple parameters. The above-described determination may be made based upon one or more of the parameters. Similar to the above description, a first threshold for determining the merging condition and a second threshold for determining the exit condition may be set for each of the parameters, and the first and second thresholds may be identical to or different from each other.

As described above, the above examples relating to various parameters are just preferred embodiments of the invention and do not define a limitation to the invention. Further, the above embodiments can be arbitrarily combined with each other or combined with other parameters.

The description above shall not be deemed as a limitation to the protection scope of the invention. Instead, all the variations and equivalents without departing from the substance of the invention are to be included in the spirit and scope of the invention.

## Claims

1. A method for managing micro-cells in a mobile communication system with a centralized base station with remote radio units, comprising:
measuring parameters of each of the micro-cells;
merging those of the micro-cells that have similar parameters and are geographically adjacent to each other, as a larger merged cell, wherein the remote radio units corresponding to the micro-cells that were merged are used as a distributed RF transceiver system of the merged cell, and wherein the merging satisfies the following conditions:
the radio interface capacity that are supported by the merged cell is not lower than the total capacity requirement of the micro-cells that were merged, if it is not limited by the available processing resources of the centralized base station.

2. The method according to Claim 1, wherein after merging, the distribution of the micro-cells and the cells in some or all of geographical areas is static.

3. The method according to Claim 1, further comprising: in some or all of geographical areas,
determining a life period of a merged cell from said parameters of the micro-cells;
repeating the steps of measuring, merging and determining the life period, when the life period expires.

4. The method according to Claim 3, wherein during the life period, if the change of said parameters of one or more of the micro-cells in the merged cell or adjacent to the merged cell goes beyond a threshold, then repeating the steps of measuring, merging and determining the life period.

5. The method according to Claim 3, wherein during the life period, if the change of said parameters of one or more of the micro-cells in the merged cell goes beyond a threshold, then following steps are performed:
the one or more of the micro-cells exit from the merged cell;
comparing said parameters of the micro-cell(s) that exited from the merged cell with those of the other independent micro-cells adjacent thereto and/or the micro-cells in the other merged cells adjacent thereto;
according to the similarity of said parameters, the micro-cell(s) that exited from the merged cell is/are kept independent micro-cell(s), join(s) the other merged cell(s) or is/are merged with other micro-cells.

6. The method according to Claim 3, wherein during the life period, if the change of said parameters of an independent micro-cell adjacent to the merged cell goes beyond a threshold, then the independent micro-cell joins said merged cell.

7. The method according to one of Claims 1-6, wherein said parameters comprise moving speeds of the user equipments in each of the micro-cells within a predetermined period.

8. The method according to Claim 7, wherein said parameters comprise an average number of the active users and/or occupancy of traffic channels in each of the micro-cells within a predetermined period, and the micro-cell in which the average number of the active users and/or the occupancy of traffic channels is/are higher than predetermined threshold(s) for a predetermined time is not merged.

9. The method according to Claim 8, wherein said parameters comprise the amount of the processing resources of the centralized base station that are allocated to a micro-cell, and the micro-cell in which said amount is higher than a predetermined threshold is not merged.

10. The method according to Claim 7, wherein said parameters comprise the amount of the processing resources of the centralized base station that are allocated to a micro-cell, and the micro-cell in which said amount is higher than a predetermined threshold is not merged.

11. The method according to one of Claims 1-6, wherein said parameters comprise an average number of the active users and/or occupancy of traffic channels in each of the micro-cells within a predetermined period, and the micro-cell in which the average number of the active users and/or the occupancy of traffic channels is/are higher than predetermined threshold(s) for a predetermined time period is not merged.

12. The method according to Claim 11, wherein said parameters comprise the amount of the processing resources of the centralized base station that are allocated to a micro-cell, and the micro-cell in which said amount is higher than a predetermined threshold is not merged.

13. The method according to one of Claims 1-6, wherein said parameters comprise the amount of the processing resources of the centralized base station that are allocated to a micro-cell, and the micro-cell in which said amount is higher than a predetermined threshold is not merged.
